# EUROPÄISCHE PATENTSCHRIFT

(11) **EP 2 644 960 B1**
(45) Veröffentlichungstag und Bekanntmachung des Hinweises auf die Patenterteilung: **19.04.2017**
(21) Anmeldenummer: 13158718.0
(22) Anmeldetag: 12.03.2013
(51) Int. Cl.: F16L 51/02, F16L 25/01

(54) **Kombination aus zwei Rohren und einem Rohrleitungsverbinder mit Kompensator**
Combination of two pipes and a pipe connector with compensator
Combinaison de deux tuyaux et d'un raccord de conduites tubulaires avec compensateur

(30) Priorität: 26.03.2012 DE 102012204800
(43) Veröffentlichungstag der Anmeldung: 02.10.2013
(73) Patentinhaber: Krones AG, 93073 Neutraubling (DE)
(72) Erfinder: Wiedenmann, Willi, 93073 Neutraubling (DE); Justl, Johann, 93073 Neutraubling (DE); Sauer, Martin, 93073 Neutraubling (DE)
(74) Vertreter: Grünecker Patent- und Rechtsanwälte PartG mbB

(56) Entgegenhaltungen:
- DE-A1- 2 738 231
- DE-A1- 3 208 516
- DE-A1- 10 259 213
- FR-A1- 2 660 046
- US-A- 1 726 483
- US-A- 2 014 355
- US-A- 2 650 111
- US-B1- 6 234 542

## Beschreibung

Die Erfindung betrifft eine Kombination aus zwei Rohren und einem Rohrleitungsverbinder mit Kompensator.

Rohrleitungsverbinder mit Kompensator werden eingesetzt, um eine thermische Veränderung, insbesondere eine Ausdehnung von Rohren auszugleichen. Insbesondere in der Lebensmittelindustrie oder anderen Anwendungen, wo stark erhitzte Güter transportiert werden, kann es sonst durch thermische Veränderungen der Rohrlänge zu Schäden an den entsprechenden Rohrsystemen kommen. Es ist vorteilhaft, wenn solche Rohrleitungsverbinder möglichst einfach ein-und ausgebaut werden können, da so die Wartung erleichtert werden kann.

Die DE 32 08 516 A1 offenbart eine Anordnung zur Aufnahme von Längsdehnung und - zusammenziehung in Rohrleitungen. Die US 2,014,355 offenbart einen vibrationsisolierenden Rohrverbinder, der die Merkmale gemäß Oberbegriff von Anspruch 1 aufweist. Die DE 27 38 231 zeigt einen Sicherheitskompensator mit Dehnungselement für Rohrleitungen. Die US 6,234,542 B1 zeigt einen Kompensator für ein Rohrsystem, die DE 102 59 213 A1 zeigt einen Längenkompensator für erdverlegte Versorgungsleitungen. Die US 1,726,483 zeigt einen Kompensator und die FR 2 660 046 zeigt ebenfalls einen Kompensator.

Gleichzeitig ist es in einigen Bereichen, wie beispielsweise bei Lebensmittelverarbeitung, erforderlich, dass ein Rohrleitungsverbinder gut zu reinigen ist. Bevorzugterweise sollte der Übergang zwischen Rohr und Rohrleitungsverbinder an der Rohrinnenseite in axiale Richtung glatt, also beispielsweise ohne Kanten oder Versatz, verlaufen. Dadurch kann verhindert werden, dass in dem Übergangsbereich schwer spülbare Bereiche, wie beispielsweise Ecken und Kanten oder Vertiefungen oder Versatz, entstehen.

Diese Anordnung des Rohrleitungsverbinders bezüglich der beiden zu verbindenden Rohre, in der jeweils der Übergang zwischen Rohr und Rohrleitungsverbinder an der Rohrinnenseite in axiale Richtung glatt verläuft ohne Versatz der Bauteile zueinander, wird auch als zentriert bezeichnet. Ein Rohrleitungsverbinder in einer solchen zentrierten Anordnung kann ebenfalls als zentriert beschrieben werden. Oft ist eine Zentrierung durch die Befestigung wie zum Beispiel Flanschverbindungen aufgrund von Spielraum in radialer Richtung nicht ausreichend zum Zentrieren. Es kann daher zu Versatz aufgrund der Schrauben und Bohrungen in den Flanschen kommen. Wenn der Rohrleitungsverbinder nicht zentriert ist, kann eine ausreichende Reinigung durch Spülen nicht gewährleistet werden kann. Daher ist es insbesondere in der Lebensmittelindustrie notwendig, einen Rohrleitungsverbinder zu Verfügung zu stellen, der zentriert eingebaut werden kann.

Dieses Problem wird gelöst durch eine Kombination aus zwei Rohren und einem Rohrleitungsverbinder nach Anspruch 1 sowie einem Verfahren zur Herstellung einer solchen Kombination nach Anspruch 13. Der Rohrleitungsverbinder umfasst einen Kompensator zur Kompensation von thermischer Veränderung, insbesondere Wärmeausdehnung sowie Mittel zum Zentrieren des Rohrleitungsverbinders.

Diese Zentrierung kann so erfolgen, dass die Innenränder des Rohrs jeweils an der Verbindungsstelle mit dem Innenrand des Rohrleitungsverbinders in Übereinstimmung gebracht werden, so dass zwischen je zwei verbundenen Teilen eine glatte Verbindung besteht.

Bei dem Rohrleitungsverbinder umfassen die Mittel zum Zentrieren eine Zentrierhülse (die im Folgenden auch als Hülse bezeichnet wird). Eine solche Hülse kann gleichmäßigen Druck ausüben und kann daher vorteilhaft sein, beispielsweise gegenüber einer Verschraubung durch Flanschverbindungen allein. Diese Zentrierhülse kann sich im befestigten Zustand über die gesamte Länge des Kompensators erstrecken. Dies kann vorteilhaft sein, da eine Zentrierhülse, die sich im befestigten Zustand über die gesamte Länge des Kompensators erstreckt, dadurch beispielsweise eine Überdehnung des Kompensators in radiale Richtung verhindern kann.

Erstrecken über die gesamte Länge des Kompensators bedeutet in diesem Zusammenhang, dass die Länge der Hülse im befestigten Zustand in axialer Richtung länger ist als die Länge des Kompensators in axiale Richtung und bei Betrachtung senkrecht zur Achse des Rohrleitungsverbinders sich die Länge der Hülse über die gesamte Länge des Kompensators erstreckt. Insbesondere kann dann beispielsweise bei Betrachtung senkrecht zu den Rohr- und Rohrleitungsverbinderachsen von außen nur die Zentrierhülse und nicht der Kompensator gesehen werden, außer an den Stellen, wo die Hülse unterbrochen ist, z.B. durch ein oder mehrere Löcher. Eine solche Zentrierhülse kann einteilig ausgebildet sein. Sie kann aber auch zweiteilig ausgebildet sein. Eine solche zweiteilige Hülse kann vorteilhaft sein, da sie einfacher montiert werden kann als eine einteilige Hülse. Beispielsweise können bei der Montage die beiden Teile mit einer Klammer zusammengefügt und dadurch befestigt werden. Insbesondere kann eine solche zweiteilige Hülse zwei gleich große Teile umfassen, die bei der Montage in der Mitte, beispielsweise durch eine Klammer, zusammengefügt werden.

Die Hülse kann in einem Bereich, wo sie im befestigten Zustand den mittleren Bereich des Kompensators umgibt, durchgehend, also beispielsweise ohne Durchbrechungen ausgebildet sein. Eine solche Zentrierhülse kann aber auch an einigen Stellen unterbrochen sein. Insbesondere kann eine solche Zentrierhülse in der Mitte nicht durchgehend ausgebildet sein. Eine solche Zentrierhülse kann beispielsweise erst nach der Montage und einem Zusammenfügen, beispielsweise mit einer Klammer, durchgehend ausgebildet sein.

Solche Rohrleitungsverbinder mit Kompensator können beispielsweise für eine Verbindung von Rohren mit einer Nennweite, die einen Wert hat, der zwischen DN 25 und DN 150 liegt, ausgebildet sein.

Der Innendurchmesser der Hülse kann so ausgebildet sein, dass er nur wenig größer als der Durchmesser der Rohr- und des Kompensatorenden, also beispielsweise der Flansche ist. Insbesondere kann der Innendurchmesser der Hülse größer als der Durchmesser der Rohr- und Kompensatorenden sein, beispielsweise um nicht mehr als 6 mm, insbesondere um nicht mehr als 5 mm oder 4 mm oder 3 mm oder 2 mm, insbesondere um nicht mehr als 1 mm, insbesondere um nicht mehr als 0,1 mm.

Diese Zentrierhülse oder ihre Teile kann nach einem Einschieben oder vorläufigen Einlegen des Kompensators über den Kompensator und mindestens einen Teil der Rohre geschoben werden. Dadurch wird der Rohrleitungsverbinder zentriert. Danach können beispielsweise jeweils das Rohrende mit einem Ende des Rohrleitungsverbinders in der zentrierten Position lösbar befestigt werden. Dies kann beispielsweise durch Verschrauben von Flanschverbindungen erfolgen.

In einer Ausführungsform der Erfindung können die Mittel zum Zentrieren zusätzlich zwei Führungsbänder umfassen. Diese können beispielsweise im Bereich wo Rohr und Rohrleitungsverbinder aufeinandertreffen je über einen Teil des Rohres und einen Teil des Rohrleitungsverbinders verlaufen. Wird nun die Hülse über den Rohrleitungsverbinder und die beiden jeweils daran angrenzenden Bereiche der Rohre, beispielsweise Flansche, gezogen, so drückt die Innenseite der Hülse gleichmäßig auf die jeweiligen Führungsbänder und führt dazu, dass der Rohrleitungsverbinder zentriert wird. Beispielsweise kann ein Führungsband jeweils teilweise über einen mit einem Rohr verbundenen Flansch (Flansch eines Rohres) und teilweise über einen mit dem Kompensator verbundenen Flansch (Flansch des Kompensators) verlaufen, wenn die Verbindung zwischen Kompensator und Rohr durch Flansche erfolgt.

Vorzugsweise sind die beiden Führungsbänder aus einem nicht-elastischen Material, wie beispielsweise Metall oder (hartem) Kunststoff, beispielsweise PTFE. Insbesondere können sie so ausgebildet sein, dass sie im befestigten Zustand etwas über die Verbindungen zwischen jeweils einem Rohren und dem Rohrleitungsverbinder, also beispielsweise den jeweiligen Flanschen, radial nach außen überstehen. Dadurch kann die Zentrierung nur durch den auf die Führungsbänder wirkenden Druck erfolgt.

In einigen Ausführungsformen können solche Führungsbänder beispielsweise so ausgebildet sein, dass sie jeweils mehr als 0,1 mm oder mehr als 2 mm oder mehr als 3 mm über den Durchmesser der jeweiligen Flansche hinausragen, wenn sie in der zentrierten Position angebracht sind.

Solche Führungsbänder können insbesondere als breite Führungsbänder ausgebildet sein, was bedeutet, dass ihre Breite (entlang der axialen Richtung) größer ist als die (entlang der radialen Richtung gemessene) Höhe. Beispielsweise kann die Breite mehr als die einfache oder mehr als die zweifache oder mehr als die vierfache Höhe betragen. Gemessen werden können Höhe und Breite im Zustand, in dem der Rohrleitungsverbinder befestigt ist um Rohre zu verbinden (befestigter Zustand).

Bei dem Rohrleitungsverbinder kann die Zentrierhülse durch zwei oder vier Befestigungshilfen befestigt werden. Solche Befestigungshilfen können z.B. als Sprengringe, die optional einen runden Querschnitt haben können, ausgebildet sein. Dafür können in der Hülse zwei Löcher zum Einführen der Befestigungshilfe(n) vorgesehen sein. Bei diesem Einführen kann eine Befestigungshilfe durch ein Loch von außen durch die Hülse durchgeführt und dann auf der dem Kompensator und den Rohren zugewandten Seite entlang der Hülse geführt werden. Die Führung entlang der Hülse kann dabei insbesondere senkrecht zur Achse der beiden Rohre und der Hülsenachse erfolgen. Insbesondere kann die Führung entlang der Hülse durch eine Aussparung in der Hülse erfolgen. Im Bereich dieser Aussparung ist die Hülse dünner als in den anderen Bereichen. Dadurch kann die Richtung, in der die Befestigungshilfe durch ein Loch eingeführt wird, vorgegeben werden. Insbesondere kann dies dadurch erreicht werden, dass nur im Bereich dieser Aussparungen genügend Platz zum Einführen von Befestigungshilfen unter die Hülse ist.

Diese zwei Löcher und optional die Aussparungen können beispielsweise in Bereichen vorgesehen sein, der im befestigten Zustand über den Rohrenden und/oder den Kompensatorenden zu liegen kommt. Solche Rohr- und/oder Kompensatorenden können beispielsweise jeweils einen Flansch umfassen.

Durch diese zwei Löcher kann dann eine Befestigungshilfe, die bevorzugt einen runden Querschnitt hat, eingeführt werden. Durch Aussparungen in der Hülse und/oder den Rohr- und/oder Kompensatorenden, wie beispielsweise den Flanschen, kann dann die Richtung, in der die Befestigungshilfe eingeführt wird, festgelegt sein. Die Befestigungshilfe oder die Befestigungshilfen können in befestigtem Zustand entlang des inneren Radius der Zentrierhülse verlaufen, und zwar beispielsweise mindestens in einem Winkelbereich von 180° oder mindestens in einem Winkelbereich von 270° oder mindestens in einem Winkelbereich von 315° oder mindestens in einem Winkelbereich von 345° entlang des Radius.

Zusätzlich kann eine Vorrichtung zwei weitere Befestigungshilfen umfassen oder für einen Einbau von zwei weiteren Befestigungshilfen ausgebildet sein. Für diese können beispielsweise weitere Vertiefungen vorgesehen sein. Solche Vertiefungen können insbesondere so vorgesehen sein, dass sie nicht oder nur teilweise unter der Hülse liegen. Die zwei weiteren Befestigungshilfen können in einem Winkelbereich von mindestens 180°, insbesondere von mindestens 270°, insbesondere mindestens 315°, insbesondere 345° entlang des Radius des Rohr- oder Kompensatorendes, beispielsweise eines Flansches, verlaufen.

Die Bewegungsmöglichkeit der durch Löcher in der Hülse eingeführten Befestigungshilfen und/oder der optionalen, zusätzlichen Befestigungshülsen, kann in die axiale Richtung beschränkt sein, z.B. dadurch, dass entsprechende Vertiefungen in oder Absätze an den jeweiligen Flanschen und/oder Aussparungen in der Hülse vorgesehen sind, die die Bewegungsmöglichkeit beschränken. Die Bewegungsmöglichkeit des Kompensators in axiale Richtung kann ebenfalls begrenzt sein. Beispielsweise kann durch die Bewegungsmöglichkeit der Befestigungshilfe gleichzeitig die Distanz festgelegt werden, um die sich der Kompensator bewegen kann. Dadurch kann beispielsweise ein zu weites Ausdehnen des Kompensators und ein zu starkes Stauchen des Kompensators, die beide zur Beschädigung des Kompensators führen können, verhindert werden. Alternativ kann eine erste Befestigungshilfe das Ausdehnen begrenzen und eine zweite Befestigungshilfe das Stauchen begrenzen. Insbesondere kann die erste, durch ein Loch in die Hülse eingeführte Befestigungshilfe die mögliche Dehnung des Kompensators in Axialrichtung begrenzen, während die optional vorhandene, zusätzliche Befestigungshilfe die mögliche Stauchung des Kompensators begrenzt, oder umgekehrt.

Der Rohrleitungsverbinder kann so ausgebildet sein, dass er oder Teile von ihm ohne eine axiale Bewegung der Rohre, die verbunden werden, von der Seite ein- und ausgebaut und/oder gewechselt werden können. Beispielsweise kann es nötig sein, den Kompensator oder optional vorhandene Dichtungen häufiger zu wechseln als die Zentrierhülse. Optional können (beispielsweise vor oder bei einem ersten Einbau eines Rohrleitungsverbinders) Flansche in das Rohrleitungssystem, insbesondere an den zwei zu verbindenden Rohren, eingeschweißt werden. Solche Flansche können beispielsweise mittels einer Einschweißvorrichtung mit exakter Bohrungsstellung und Abstand eingeschweißt werden.

Beim Einbau eines Rohrleitungsverbinders kann zuerst die Zentrierhülse über eines der beiden Rohre gestreift werden, die miteinander verbunden werden sollen. Im Fall von einer zweiteilig ausgebildeten Hülse kann beispielsweise auch über jedes der zu verbindenden Rohre ein Hülsenteil gestreift werden. Dann kann der Rohrleitungsverbinder zwischen die beiden Rohre lose eingeführt, z.B. geschoben werden, optional Führungsbänder angebracht werden, und die Zentrierhülse über den Kompensator und die Rohrenden und/oder Verbindungsmittel, insbesondere beispielsweise Flansche der zu verbindenden Rohre und die optional vorhandenen Führungsbänder, gestreift werden. Bei ein- und zweiteilig ausgebildeten Hülsen können optional vor dem Überstreifen der Hülsen oder Hülsenteile über den Kompensator ein oder zwei Erdungsvorrichtungen, wie beispielsweise Federn, angebracht werden, so dass die Hülse bzw. jedes Hülsenteil einzeln geerdet ist. Der oder die Teile der Erdungsvorrichtung können so ausgebildet sein, dass sie Druck auf die Hülse ausüben, damit ein stabiler Kontakt aufrechterhalten werden kann.

Bei zweiteiligen Hülsen können anschließend auch die beiden Hülsenteile über den Kompensator, die Rohrenden und/oder Verbindungsmittel, insbesondere beispielsweise Flansche, der zu verbindenden Rohre und die optional vorhandenen Führungsbänder so gestreift werden, dass sie an einer Verbindungsstelle aufeinandertreffen. Anschließend können die beiden Hülsenteile, beispielsweise Hülsenhälften, aneinander befestigt und/oder miteinander verbunden werden. Eine solche Befestigung kann beispielsweise durch eine Klammer erfolgen. Durch ein optionales Einführen einer oder zwei Befestigungshilfen durch in der Zentrierhülse vorhandene Löcher kann dann die Zentrierhülse befestigt werden und die Bewegung der Hülse in axiale Richtung begrenzt werden. Beispielsweise kann durch die zwei eingeführten Befestigungshilfen die Bewegung der Hülse in axiale Richtung so begrenzt werden, dass dadurch auch gleichzeitig die mögliche Stauchung und/oder mögliche Dehnung des Kompensators begrenzt wird. Anschließend kann der so zentrierte Rohrleitungsverbinder in der zentrierten Position, beispielsweise durch das Verschrauben von Flanschverbindungen in der zentrierten Position, lösbar befestigt werden.

Anschließend können optional zwei zusätzliche Befestigungshilfen angebracht werden. Solche zusätzlichen Befestigungshilfen, zusätzlich zu den zwei bereits optional vorhandenen Befestigungshilfen, können vorteilhaft sein, wenn durch die bereits optional vorhandenen Befestigungshilfen nur eine Kompensatorbewegung in eine Richtung begrenzt wird. Beispielsweise kann durch die bereits vorhandenen Befestigungshilfen beispielsweise nur die Ausdehnung oder Stauchung des Kompemsators begrenzt sein. Durch die zusätzlichen Befestigungshilfen könnte dann jeweils die Stauchung oder Ausdehnung begrenzt werden. Dadurch kann dann der Kompensator gegen zu starke Dehnung und zu starke Stauchung gesichert sein.

Zum Ausbau des jeweiligen Rohrleitungsverbinders können die Schritte beispielsweise in umgekehrter Reihenfolge vorgenommen werden. Alternativ kann auch nach Entfernen der einen oder zwei Befestigungshilfen erst die Hülse und dann die Flanschverbindung gelöst werden und der Kompensator so ausgebaut werden. In einem letzten Schritt kann dann die Hülse, so sie ersetzt werden soll, auch entfernt werden.

Die zuvor beschriebenen Schritte können jeweils von der Seite der Rohre vorgenommen werden, ohne dass eine axiale Bewegung der Rohre auseinander oder zueinander nötig wird. Dies kann den Ein- und Ausbau des Rohrleitungsverbinders sowie seine Wartung erleichtern.

Erfindungsgemäß umfasst der Rohrleitungsverbinder an den beiden Kompensatorenden, mit denen der Rohrleitungsverbinder an die Rohre stößt, je einen Flansch. Die beiden zu verbindenden Rohr umfassen ebenfalls an den Rohrenden Flansche, die dann beispielsweise jeweils mit einem Flansch am Kompensatorende verschraubt werden können.

Optional können einer oder beide der beiden Flansche des Kompensators an einer Seite abgesetzt sein. Dies kann beispielsweise vorteilhaft sein, da ein erhöhter Rand, der sich durch den Absatz ergibt, beispielsweise dazu dienen kann, die Bewegung eines Führungsbands in einer Richtung zu verhindern. Auch kann ein solcher Rand als Bewegungsbegrenzung einer Befestigungshilfe wirken. Alternativ oder zusätzlich können einer oder beide der Flansche des Rohrleitungsverbinders eine Vertiefung, beispielsweise zur Aufnahme der Befestigungshilfe(n) umfassen. Durch die Ränder an den Seiten der Vertiefungen und/oder von einem oder mehreren Absätzen können beispielsweise jeweils die Bewegungsmöglichkeit von Befestigungshilfe(n) und/oder Führungsbändern beschränkt werden.

Erfindungsgemäß verbindet der Rohrleitungsverbinder zwei Rohre, die jeweils Flansche mit gleichem Durchmesser aufweisen. (Als Durchmesser wird in diesem Text jeweils der maximale Durchmesser des Flansches, der beispielsweise im befestigten Zustand senkrecht zur Achse des Rohrleitungsverbinders gemessen werden kann, bezeichnet). Optional kann ein erfindungsgemäßer Rohrleitungsverbinder auch diese beiden Flansche der jeweiligen Rohre, mit denen er verbunden werden kann, umfassen. Ein solcher Rohrleitungsverbinder kann beispielsweise gleich mit passenden Flanschen geliefert werden, die dann an den Rohrenden der zu verbindenden Rohre angeschweißt werden könnten. Das Einschweißen kann beispielsweise mittels Einschweißvorrichtungen mit exakter Bohrungsstellung und Abstand erfolgen.

In einigen Ausführungsformen haben die Flansche an den Kompensatoren den gleichen Durchmesser wie die Flansche der Rohre, mit denen er verbunden werden kann.

Einer oder beide der Flansche der beiden zu verbindenden Rohre können eine Vertiefung, beispielsweise zur Aufnahme des oder der Befestigungshilfen, umfassen und/oder auf einer Seite abgesetzt sein. Durch die Ränder an den Seiten der Vertiefungen oder an der Seite der Absätze können jeweils die Bewegungen von z.B. Befestigungshilfen und/oder Führungsbändern beschränkt werden.

Vorzugsweise liegen die beiden Ränder von Flanschen im Bereich, wo die Flansche im zentrierten Zustand aufeinandertreffen, auf gleicher Höhe.

Beispielsweise kann ein Absatz des Flansches bei einem zu verbindenden Rohr genauso tief sein wie der Absatz eines oder der Flansche am oder an den Kompensatorende(n). Ist dies bei Flanschen mit gleichem Durchmesser der Fall, können die beiden am äußeren Rand der Flansche liegenden Ränder, wenn sie zentriert sind, auf gleicher Höhe liegen.

Bei Flanschen mit verschiedenen Durchmessern kann es alternativ auch vorteilhaft sein, wenn bei zwei aneinander zu befestigenden Flanschen der eine einen Absatz aufweist und der andere einen Absatz mit einer anderen Tiefe aufweist, so dass die Höhen gemessen vom Mittelpunkt des Querschnitts aus in radialer Richtung gleich sind. Dadurch kann ebenfalls bewirkt werden, dass die am äußeren Rand der Flansche liegenden Ränder an zwei aufeinandertreffenden Flanschen auf gleicher Höhe liegen, wenn sie zentriert sind.

Erfindungsgemäß umfasst der Rohrleitungsverbinder Dichtungen, die nach dem Befestigen der Vorrichtung jeweils zwischen einem Rohr und der Vorrichtung abdichten. Erfindungsgemäß können diese Dichtungen einzeln ausgewechselt werden. Dies kann vorteilhaft sein, da dadurch nicht jeder Dichtungsverschleiß ein komplettes Auswechseln des gesamten Rohrleitungsverbinders oder Kompensators erforderlich macht. Vorzugsweise können solche Dichtungen aus einem Elastomer, wie beispielsweise EPDM, HNBR, FKM oder Ähnlichem ausgebildet sein. Solche Dichtungen sind sehr günstig zu ersetzen. Beispielsweise können Dichtungen aus PEEK oder PTFE basierenden Werkstoffen eingesetzt werden. Durch einzeln wechselbare Dichtungen können Kosten und Aufwand reduziert werden. Erfindungsgemäß sind die Dichtungen so ausgebildet, dass sie im befestigten Zustand aufgrund ihrer Form, beispielsweise durch eine Ausbuchtung in einem Flansch oder Ähnliches, an ihrer Position gehalten werden. Erfindungsgemäß sind die Dichtungen so angeordnet, dass sie an der Rohrinnenkante ebenfalls in axiale Richtung glatt, also ohne Versatz und Kanten, mit den Kanten von Rohrleitungsverbinder und Rohr verlaufen.

In einigen Ausführungsformen kann ein Kompensator einen Faltenbalg umfassen. Beispielsweise kann ein Kompensator einen Faltenbalg umfassen, bei dem die Senken einen zylindrischen Querschnitt aufweisen und/oder bei dem das Verhältnis der radialen Tiefe zu einer axialen Breite der Falten etwa 1 oder größer beträgt, wodurch der Faltenbalg leichter zu spülen sein kann. So ein Faltenbalg kann insbesondere aus einem haltbaren und/oder gut spülbaren Material, wie beispielsweise Metall hergestellt sein. Dadurch kann beispielsweise verhindert werden, dass der Faltenbalg selber von scharfen Reinigungsmitteln oder durch die Rohre geleitete Güter leicht angreifbar ist.

Die Erfindung umfasst ferner einen Ventilknoten und/oder ein Rohrsystem, das einen, zwei, drei oder mehr der zuvor beschriebenen Rohrleitungsverbinder umfasst.

Weiterhin umfasst die Erfindung ein Verfahren zur Herstellung einer zuvor beschriebenen Kombination mit den Schritten, die zuvor im Zusammenhang mit dem Einbau des Rohrleitungsverbinders beschrieben wurden.

Weitere Ausführungsformen der Erfindung werden unter Bezugnahme auf die Zeichnungen beschrieben. Dabei zeigt
- Fig. 1 a,b: Rohrleitungsverbinder;
- Fig. 2a bis 2e: mögliche Ausführungsformen für einen Teil eines Rohrleitungsverbinders;
- Fig. 3a bis 3d: Ansichten von befestigten Rohrleitungsverbindern;
- Fig. 4: ein Rohrsystem und/oder Ventilknoten.

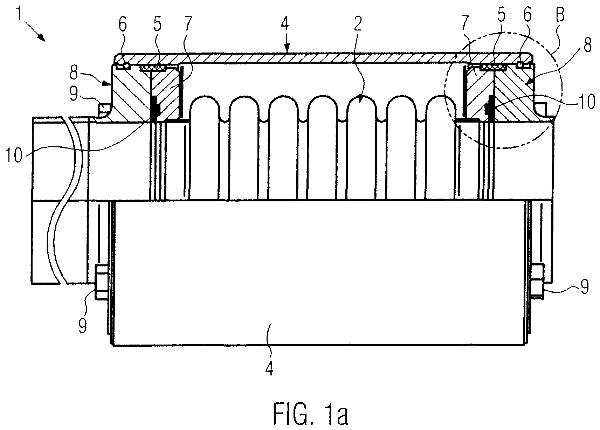

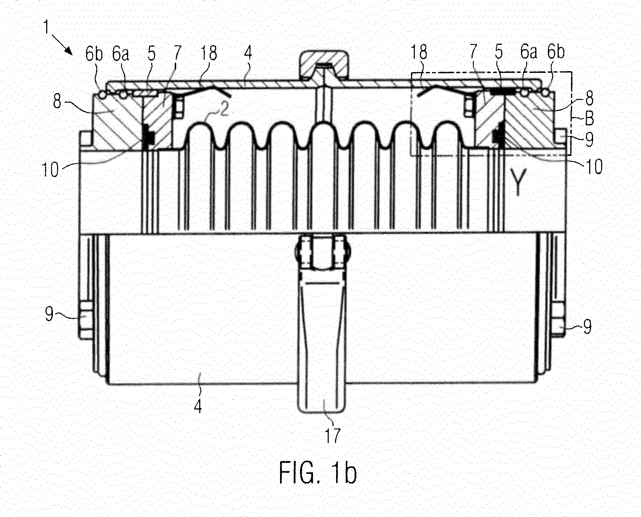

Fig. 1a zeigt einen Rohrleitungsverbinder 1, der einen Kompensator 2, eine Befestigungshilfe 6 sowie Mittel zum Zentrieren des Kompensators umfasst. In dem in Fig. 1 a gezeigten Beispiel umfassen die Mittel zum Zentrieren eine Zentrierhülse 4 sowie Führungsbänder 5.

In der unteren Hälfte der in Figur 1 a gezeigten Ansicht ist eine (befestigte) Zentrierhülse von außen erkennbar, in der oberen Hälfte ist ein Querschnitt durch die Achse des Rohrleitungsverbinders sichtbar.

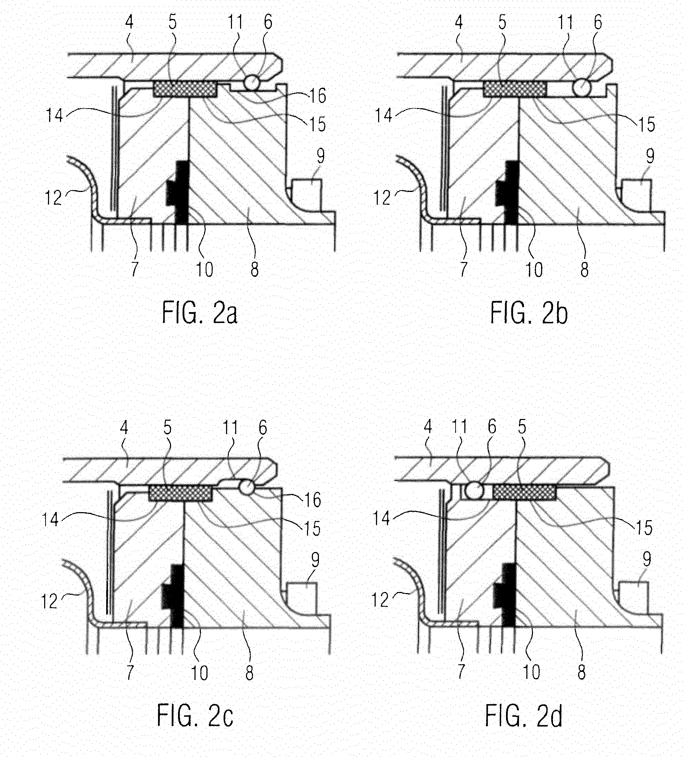

Des Weiteren umfasst der Rohrleitungsverbinder Flansche 7 an den beiden Enden des Kompensators. Der Rohrleitungsverbinder ist durch Flansche 8 mit zwei Rohren verbunden und umfasst die Flansche 8. Beispielsweise durch Verschrauben von Flanschverbindungen mit Schrauben 9 kann der Rohrleitungsverbinder an den Rohren lösbar befestigt sein. Wie in Fig. 1 gezeigt, umfasst der Kompensator auch Dichtungen 10, die im befestigten Zustand als Dichtungen wirken und einen Austritt von Flüssigkeit oder Transportgut aus dem Rohr verhindern können. Insbesondere ist eine Dichtung so ausgebildet, dass sie einzeln gewechselt werden kann. Verschiedene Ausführungsformen für den Bereich, wo die Zentrierhülse auf den beiden verbundenen Enden von Kompensator und Rohr aufliegt, der in Fig. 1 a und b als B bezeichnet ist, sind in den Fig. 2a bis 2e gezeigt. Die in Fig. 2a bis 2e gezeigten Ausführungsformen sind dabei als Alternativen dargestellt, können aber auch kombiniert werden. Beispielsweise kann auf der einen Seite eines Rohrleitungsverbinders eine Ausführungsform, auf der anderen Seite des Rohrleitungsverbinders eine andere Ausführungsform des Bereiches B angeordnet sein.

Ein Rohrleitungsverbinder, wie beispielsweise in Fig. 1 a gezeigt, kann beispielsweise folgendermaßen eingebaut werden: Die Zentrierhülse 4 kann über ein zu verbindendes Rohr gestreift werden. Da sie insbesondere am Rohr entlang verschoben werden kann, kann anschließend der Rohrleitungsverbinder 1 zwischen den beiden Rohren eingeführt werden. Optional können die Führungsbänder 5 an ihrer Position angebracht werden. Dies kann beispielsweise dadurch geschehen, dass diese von der Seite angebracht werden. Anschließend kann die Zentrierhülse 4 über den Kompensator 2 und die Rohrenden, die als Flansche 8 ausgebildet sind, gestreift werden. Durch den Druck der Zentrierhülse 4 auf die Führungsbänder 5 kann der Kompensator und/oder der Rohrleitungsverbinder dadurch zentriert werden. Anschließend können die in diesem Beispiel zwei Befestigungshilfen 6 durch zwei in der Hülse 4 vorhandene Löcher eingeführt werden, so dass sie in den Aussparungen 11 in der Hülse zu liegen kommen. Auch kann der Rohrleitungsverbinder 1 in der zentrierten Position an den beiden Rohrenden lösbar befestigt werden. Insbesondere kann dies beispielsweise durch Verschrauben von Flanschen geschehen, wobei insbesondere jeweils ein Flansch an einem Rohrende mit einem Flansch am Kompensator verschraubt werden können. Alternativ kann das lösbare Befestigen des Rohrleitungsverbinders 1 auch vor dem Einführen der Befestigungshilfen 6 erfolgen.

In anderen Beispielen können der Schritt des Anbringens von Führungsbändern und/oder des Einführens von zwei Befestigungshilfen durch Löcher entfallen oder zusätzlich zu den zwei Befestigungshilfen noch zwei weitere Befestigungshilfen angebracht werden.

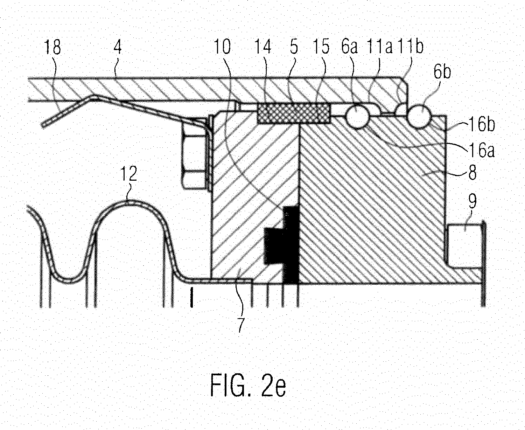

In Fig. 1b ist eine andere Ausführungsform eines Rohrleitungsverbinders gezeigt. Die in Fig. 1 b gezeigten Bauteile 2, 4, 5, 7, 8, 9, 10 entsprechen den in Fig. 1 a gezeigten Bauteilen. Unterschiede ergeben sich zur Fig. 1 a z.B. darin, dass die Hülse 4 in dem in Fig. 1b gezeigten Beispiel zweigeteilt ist. Sie wird in dem gezeigten Beispiel durch die Klammer 17 so fixiert, dass sie in befestigter Stellung die gleiche Funktionalität zeigt, wie Hülse 4 aus Fig. 1 a. Weiterhin unterscheidet sich die in Fig. 1b gezeigten Vorrichtung von der Vorrichtung aus Fig. 1 a im Bereich B, der detailliert in Fig. 2e gezeigt ist. Jedoch können auch andere Ausführungsformen des Bereichs B in der in Fig. 1b gezeigten Vorrichtung Anwendung finden, beispielsweise die in den Fig. 2a bis 2d gezeigten Ausführungsformen.

Im Fall einer zweiteiligen Hülse kommt üblicherweise beim Einbau des Rohrleitungsverbinders noch der zusätzliche Schritt des Zusammenfügens der Hülsenteile und des Verbindens der Hülsenteile, beispielsweise durch eine Klammer 17, hinzu. Optional kann auch noch ein Anbringen von einer oder mehreren Erdungsvorrichtungen 18 beim Einbau eines Rohrleitungsverbinders mit ein- oder zweiteiliger Hülse erfolgen.

In Fig. 2a kann man einen Teil der im Querschnitt gezeigten Zentrierhülse 4 erkennen. Dieser kann, wie in diesem Beispiel gezeigt, eine Aussparung 11 aufweisen, in die eine Befestigungshilfe 6, z.B. mit kreisförmigem Querschnitt, eingeführt werden kann. Vorzugsweise kann sich die Befestigungshilfe, wie beispielsweise ein Sprengring, in der Aussparung 11 drehen, aber bevorzugterweise kann sich die Befestigungshilfe 6 in der in Fig. 2a gezeigten Ausführungsform nicht so bewegen, dass ihr Querschnitt sich bezüglich der Zentrierhülse 4 axial verschiebt.

In Fig. 2a sind ebenfalls ein Teil des Faltenbalgs 12, ein Flansch 7, der an einer Seite des Kompensators angebracht ist, ein mit einem Rohr verbundener Flansch 8, eine Schraube 9, mit der die beiden Flansche miteinander verschraubt sind, ein Führungsband 5, ein Absatz 14 im Flansch 7 sowie ein Absatz 15 im Flansch 8 sichtbar. Die beiden Absätze 14 und 15 sind zusammen in diesem gezeigten Beispiel gleich tief und bilden zusammen eine Vertiefung, die so breit ist, dass die Ränder der Vertiefung das Führungsband an einer Position fixieren. Alternative können die beiden Absätze auch verschieden tief sein oder ein Absatz so tief sein, dass sie in zentrierter Position mit dem Rand des zweiten Flansches bündig abschließt, beispielsweise wenn die Flansche verschiedene Durchmesser haben (hier nicht gezeigt). In diesem Fall können die beiden Absätze oder die ein Absatz und der eine Durchmesser ebenfalls so ausgebildet sein, dass ihre Ränder an dem zusammentreffenden Bereich auf gleicher Höhe zu liegen kommen.

Wie in Fig. 2a gezeigt, kann das Führungsband so ausgebildet sein, dass es etwas über den äußeren Radius der Flansche hinausragt, so dass der Kraftübertrag von der Zentrierhülse auf die beiden Flansche nur über das Führungsband 5 erfolgt.

Ebenfalls sichtbar ist im Flansch 8 eine Vertiefung 16, die zur Aufnahme der Befestigungshilfe 6 geeignet ist. Innerhalb dieser Vertiefung 16 kann sich die Befestigungshilfe 6 in axiale Richtung bewegen. Durch die Abmessungen der Vertiefung 16 wird gleichzeitig die maximale und minimale Ausdehnung des Kompensators 2 festgelegt. In einigen Ausführungsformen der Erfindung kann beispielsweise ein Kompensationsweg von 6 mm festgelegt werden. In einigen Ausführungsbeispielen kann sich beispielsweise in einer Aussparung 16 die Befestigungshilfe 6 jeweils um 3 mm oder weniger als 3 mm oder mehr als 3 mm oder etwa 6 mm, mehr als 6 mm oder weniger als 6 mm bewegen.

Die Dichtung 10, die im Querschnitt dargestellt ist, ist einzeln auswechselbar. Ein Kompensator, der z.B. als Faltenbalg 12 ausgebildet sein kann oder einen Faltenbalg 12 umfassen kann, wird vorzugsweise auf einem haltbaren Material, wie beispielsweise Metall oder Ähnlichem hergestellt. Dadurch kann er leicht zu reinigen sein und wird beispielsweise durch scharfe Reinigungsmittel weniger stark angegriffen. Damit kann das verschleißanfälligste Teil des Rohrleitungsverbinders 1 die Dichtung 10 sein, die jedoch einzeln wechselbar ist.

In Fig. 2b ist eine Anordnung gezeigt, in der der Flansch 7 und Flansch 8 beide Absätze aufweisen. Der Absatz 15 von Flansch 8 schließt in der zentrierten Position bündig mit dem Absatz 14 von Flansch 7 ab. Die Bewegungsmöglichkeit des Führungsbands 5 kann auf der einen Seite durch den Rand des Absatz 14 in axiale Richtung eingeschränkt werden. Auf der anderen Seite wird die Bewegungsmöglichkeit des Führungsbandes dadurch eingeschränkt, dass die Befestigungshilfe 6 vorhanden ist. Das Führungsband kann sich daher in axiale Richtung nicht weiter als bis zur Befestigungshilfe 6 bewegen. Bevorzugt ist in einer solchen Ausführungsform die Bewegungsmöglichkeit der Befestigungshilfe 6 durch einen Rand des Absatzes 15 begrenzt. Zusätzlich sind die Abmessungen der durch die beiden Absätze 14, 15 gebildeten Vertiefung vorzugsweise so, dass gleichzeitig das Führungsband 5 nicht vollständig auf den Flansch 8 rutschen kann, sondern immer sowohl auf Flansch 7 als auch Flansch 8 Kraft zur Zentrierung ausübt.

Die weiteren Merkmale des in Fig. 2b gezeigten Bereichs können beispielsweise den in Fig. 2a gezeigten Merkmalen entsprechen.

In Fig. 2c ist wiederum eine weitere Anordnung gezeigt, in der der Flansch 7 einen Absatz 14 und der Flansch 8 einen Absatz 15 aufweisen und durch die Ränder der beiden Absätze das Führungsband 5 gegen Verrutschen in axialer Richtung in seiner Position gehalten wird. Abweichend beispielsweise von den zuvor diskutierten Beispielen ist in diesem Fall jedoch eine Vertiefung 16 in Flansch 8 so vorgesehen, dass sie genau die Befestigungshilfe 6 aufnimmt und die Befestigungshilfe 6 sich in der Vertiefung zwar drehen kann, aber der Querschnitt der Befestigungshilfe 6 nicht in axialer Richtung gegenüber dem Flansch 8 bewegbar ist. Eine Bewegung der Zentrierhülse ist in dem in Fig. 2c gezeigtem Beispiel durch die Aussparung 11 in der Zentrierhülse ermöglicht, die eine Bewegung der der Befestigungshilfen und damit der Zentrierhülse in axiale Richtung gesetzten Grenzen erlaubt. In dem in Fig. 2c gezeigten Beispiel werden die axialen Bewegungsspielräume der Hülse durch die Ausdehnung der Aussparung 11 in der Hülse 4 festgelegt.

In anderen Ausführungsformen (nicht gezeigt) ist es auch möglich, dass Aussparungen in der Zentrierhülse und/oder den Flanschen jeweils beide eine gewisse Bewegung der Befestigungshilfe in axiale Richtung erlauben. In diesem Fall kann der Kompensationsweg durch die beiden durch die Aussparungen festgelegten Bewegungsmöglichkeiten festgelegt sein.

In Fig. 2d ist wiederum eine weitere mögliche Ausführungsform gezeigt, in der Flansch 8 einen Absatz 15 aufweist, und Flansch 7 ebenfalls einen Absatz 14 aufweist. Die Ränder der Absätze 14 des Flanschs 7 schließen bei Zentrierung des Rohrleitungsverbinders bündig mit den Rändern des Absatzes 15 von Flansch 8 ab. Die Zentrierung erfolgt wieder mittels eines Führungsbandes 5, die Fixierung des Führungsbandes 5 erfolgt auf der einen Seite durch den Rand, der durch den Absatz 15 entsteht und auf der anderen Seite durch die Befestigungshilfe 6. Auch können, wie in Fig. 2b, die Maße der Zentrierhülse sowie die Positionen der Aussparungen 11 so gewählt werden, dass das Führungsband 5 immer auf beiden Flanschen zu liegen kommt und gleichzeitig die Führungshilfe 6 nicht vom Flansch 7 abrutschen kann, beispielsweise wegen dem Rand des Absatzes 14 von Flansch 7.

In Fig. 2e ist eine weitere Ausführungsform gezeigt. In dieser sind wiederum eine Hülse 4, ein Führungsband 5, Flansche 7 und 8, Schrauben 9 und ein Kompensator, der z.B. als Faltenbalg 12 ausgebildet sein kann oder einen Faltenbalg 12 umfassen kann, zu erkennen. Diese können in ihrer Funktion beispielsweise den in den Fig. 2a bis 2d gezeigten gleichnamigen Komponenten entsprechen.

Das Führungsband 5 liegt in Fig. 2e ebenfalls in einer Vertiefung, die aus den beiden Absätzen 14 und 15 von Flansch 7 und 8 gebildet wird. Die Bewegung des Führungsbandes ist damit in axiale Richtung begrenzt oder nicht möglich.

In der in Fig. 2e gezeigten Ausführungsform sind im Bereich B zwei Befestigungshilfen 6a und 6b vorhanden. Insgesamt kann damit eine Vorrichtung, die zwei in dem in Fig. 2e gezeigten Beispiel gezeigte Teile umfasst, wenn sie symmetrisch ausgebildet ist, durch vier Befestigungshilfen befestigt werden. Die Befestigungshilfe 6a liegt in einer Vertiefung 16a im Flansch 8. Die Vertiefung 11a in der Hülse erlaubt eine Bewegung der Hülse relativ zur Achse der Befestigungshilfe 6a. Durch die Aussparung 11 a ist jedoch nur die maximale Dehnung beschränkt, die der Kompensator erreichen kann, und nicht die Stauchung.

Die Befestigungshilfe 6b ist in dem gezeigten Beispiel nicht unter der Hülse und gerät auch für den Fall maximaler Stauchung nur teilweise unter der Hülse 4. Die Aussparung 11 b in Hülse 4 wirkt bei Stauchung als Anschlag und verhindert damit eine weitere Stauchung des Kompensators. Die Befestigungshilfe 6b liegt in Vertiefung 16b im Flansch 8. In dem gezeigten Beispiel begrenzen damit die Befestigungshilfen 6a und 6b gemeinsam sowohl die Dehnung als auch die Stauchung des Kompensators, so dass diese nicht über ein für den Kompensator verträgliches Maß hinaus möglich sind.

Weiter ist in Fig. 2e eine zusätzliche Erdungsvorrichtung 18 sichtbar, die beispielsweise lösbar durch Schrauben am Flansch 7 befestigt sein kann. Diese kann dazu ausgebildet sein, dass sie Druck radial nach außen auf die Hülse ausübt und dadurch die beiden Hülsenteile erden kann. Dies kann für Anwendungen des Rohrleitungsverbinders in explosionsgefährdeten Bereichen vorteilhaft sein, da sich die Hülse sonst statisch aufladen kann, beispielsweise wenn die Führungsbänder nicht leitfähig sind.

Die in Fig. 2e gezeigte Erdungsvorrichtung kann beispielsweise in Form von einer (leitenden) Feder ausgebildet sein. Üblicherweise ist (mindestens) eine Erdungsvorrichtung pro Hülsenteil vorhanden. Solche Erdungsvorrichtungen können auch an den Ausführungsformen, die in Fig. 2a bis 2d gezeigt sind, vorhanden sein.

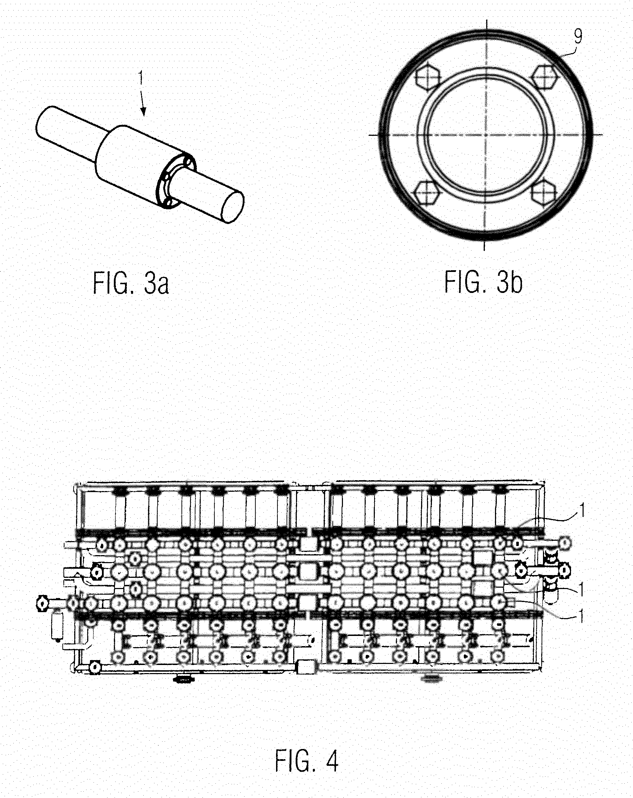

Die Fig. 3a und 3b zeigen Außenansichten eines Rohrleitungsverbinders. In Fig. 3a ist ein verschraubter Rohrleitungsverbinder 1 mit einteiliger Hülse von außen sichtbar. Von außen ist dabei nur eine Hülse zu sehen sowie die Verschraubungen und der Flansch sowie die Rohre, die verbunden sind.

In Fig. 3b ist eine Sicht auf die Verschraubungen in Richtung der Rohre sichtbar. Die Flansche können beispielsweise mit vier M8 x 25 Schrauben verschraubt werden.

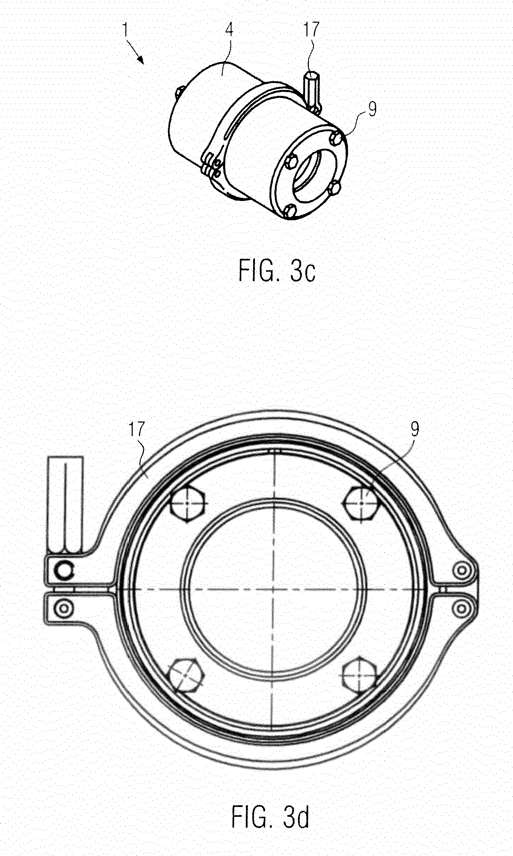

Die Fig. 3c und 3d zeigen Außenansichten eines Rohrleitungsverbinders, bei dem die Hülse 4 zweiteilig ausgebildet ist. Sichtbar ist z.B. in Fig. 3c die Hülse 4, die mittels einer Klammer 17 oder einem ähnlichen Hilfsmittel in der Mitte verbunden ist. Wie in Vorrichtungen mit einteilig ausgebildeten Hülsen kann auch in diesem Beispiel die Verbindung lösbar, beispielsweise über Schrauben 9, erfolgen.

In Fig. 3d ist eine Sicht auf die Verschraubung in Richtung der Rohre sichtbar. Zusätzlich sieht man dabei die Klammer 17 als Beispiel für eine Möglichkeit, die beiden Hülsenteile miteinander zu verbinden.

Fig. 4 zeigt ein Beispiel für ein Rohrsystem und/oder Ventilknoten, die eines oder mehrere der zuvor beschriebenen Rohrleitungsverbinder umfassen. Solche Ventilknoten und/oder Rohrsysteme können beispielsweise in der Lebensmitteltechnologie eingesetzt werden. In diesem Fall sind Wärmeausdehnungskompensatoren notwendig, da erhitzte Güter transportiert werden können. Bei einer Ausdehnung der Rohre kann es auch bei relativ kleinen Ausdehnungen bereits zu Schäden kommen, wenn ein Rohrsystem ohne solche Rohrleitungsverbinder mit Kompensator betrieben wird.

## Patentansprüche

1. Kombination aus zwei Rohren und einem Rohrleitungsverbinder, wobei der Rohrleitungsverbinder (1) einen Kompensator (2) und Mittel zum Zentrieren des Rohrleitungsverbinders (1) umfasst, wobei die Mittel zum Zentrieren des Rohrleitungsverbinders (1) eine Zentrierhülse (4) umfassen, die sich im befestigten Zustand, in dem der Rohrleitungsverbinder befestigt ist um die Rohre zu verbinden, über die gesamte Länge des Kompensators erstreckt, wobei die Kompensatorenden jeweils einen Flansch (7) umfassen,
wobei der Rohrleitungsverbinder die zwei Rohre, die jeweils Flansche (8) mit gleichem Durchmesser aufweisen, verbindet,
und wobei der Rohrleitungsverbinder (1) Dichtungen (10) umfasst, die nach dem Befestigen des Rohrleitungsverbinders (1) jeweils zwischen einem der Rohrflansche (8) und dem zugehörigen Flansch (7) des Kompensatorendes abdichten, **gekennzeichnet dadurch, dass** die Dichtungen (10) einzeln gewechselt werden können und so ausgebildet sind, dass sie im befestigten Zustand aufgrund ihrer Form an ihrer Position gehalten werden und so angeordnet sind, dass sie an der Rohrinnenkante in axiale Richtung glatt mit der Kante von Rohrleitungsverbinder und Rohr verlaufen.

2. Kombination nach Anspruch 1, **gekennzeichnet dadurch, dass** der Rohrleitungsverbinder (1) nach dem Zentrieren lösbar befestigt werden kann.

3. Kombination nach einem der Ansprüche 1-2, **gekennzeichnet dadurch, dass** die Mittel zum Zentrieren zwei Führungsbänder (5) umfassen.

4. Kombination nach einem der Ansprüche 1-3, **gekennzeichnet dadurch, dass** die Zentrierhülse (4) durch eine oder zwei Befestigungshilfen (6), wie zum Beispiel Sprengringe, befestigt werden kann.

5. Kombination nach einem der Ansprüche 1-4, **gekennzeichnet dadurch, dass** die Bewegungsmöglichkeit der Befestigungshilfen (6) und/oder des Kompensators (2) in axialer Richtung begrenzt ist.

6. Kombination nach einem der Ansprüche 1-5, **gekennzeichnet dadurch, dass** der Rohrleitungsverbinder (1) und/oder Teile davon ohne eine Bewegung der Rohre in axiale Richtung von der Seite gewechselt werden können.

7. Kombination nach einem der Ansprüche 1-6, wobei einer oder beide Flansche (1) optional auf einer Seite abgesetzt sind und/oder eine Vertiefung umfassen.

8. Kombination nach Anspruch 1, **gekennzeichnet dadurch, dass** seine Flansche (7) den gleichen Durchmesser haben wie die Flansche (8) der Rohre.

9. Kombination nach einem der Ansprüche 1-8, **gekennzeichnet dadurch, dass** ein oder beide Flansche (8) der beiden zu verbindenden Rohre eine oder je eine Vertiefung (16) zur Aufnahme des oder der Befestigungshilfen (6) umfassen und/oder ein oder beide Flansche (8) auf einer Seite abgesetzt sind.

10. Kombination nach einem der Ansprüche 1-9, **gekennzeichnet dadurch, dass** der Kompensator (2) einen Faltenbalg umfasst.

11. Kombination nach einem der Ansprüche 1-10, **gekennzeichnet dadurch, dass** die Hülse (4) zweiteilig ausgebildet ist.

12. Ventilknoten und/oder Rohrsystem, **dadurch gekennzeichnet, dass** er und/oder es eine, zwei, drei oder mehr der Kombinationen nach einem der Ansprüche 1 bis 11 umfasst.

13. Verfahren zur Herstellung der Kombination nach einem der Ansprüche 1 bis 11, **gekennzeichnet dadurch, dass** es die folgenden Schritte umfasst:
Streifen der Zentrierhülse oder deren Teile über eines der beiden zu verbindenden Rohre;
Einführen des Rohrleitungsverbinders zwischen die beiden Rohre;
optionales Anbringen von Führungsbändern;
Streifen der Zentrierhülse über den Kompensator und die Rohrenden;
optionales Einführen von zwei Befestigungshilfen durch zwei in der Zentrierhülse vorhandene Löcher;
optionales Anbringen von zwei weiteren Befestigungshilfen,
lösbares Befestigen des Rohrleitungsverbinders in der zentrierten Position.

## Claims

1. Combination consisting of two pipes and a pipe connector, wherein the pipe connector (1) comprises a compensator (2) and means for centring of the pipe connector (1), wherein the means for centring the pipe connector (1) comprises a centring sleeve (4) that, in the mounted state in which the pipe connector is mounted to connect the pipes, extends along the entire length of the compensator, wherein the compensator ends each comprise a flange (7),
wherein the pipe connector connects the two pipes, each having flanges (8) with the same diameter,
and wherein the pipe connector (1) comprises seals (10), each of which after the mounting of the pipe connector (1) seals between one of the pipe flanges (8) and the associated flange (7) of the compensator end, **characterised in that** the seals (10) can be exchanged individually and are configured such that in the mounted state they are held due to their shape at their position and are arranged such that they run on the inner edge of the pipe in axial direction smoothly with the edge of pipe connector and pipe.

2. Combination according to Claim 1, **characterised in that** the pipe connector (1) can be mounted detachably after the centring.

3. Combination according to one of the Claims 1-2, **characterised in that** the means for centring comprise two guide belts (5).

4. Combination according to one of the Claims 1-3, **characterised in that** the centring sleeve (4) can be mounted by means of one or two mounting aids (6), such as, for example, snap rings.

5. Combination according to one of the Claims 1-4, **characterised in that** the freedom of movement of the mounting aids (6) and / or of the compensator (2) is confined in the axial direction.

6. Combination according to one of the Claims 1-5, **characterised in that** the pipe connector (1) and / or parts thereof can be exchanged from the side without a movement of the pipes in axial direction.

7. Combination according to one of the Claims 1-6, **characterised in that** one or both flanges (1) are optionally stepped on one side and / or comprise a recess.

8. Combination according to Claim 1, **characterised in that** its flanges (7) have the same diameter as the flanges (8) of the pipes.

9. Combination according to one of the Claims 1-8, **characterised in that** one or both flanges (8) of the two pipes to be connected comprise one, or each comprises one, recess (16) for holding the mounting aid(s) (6) and / or one or both flanges (8) are stepped on one side.

10. Combination according to one of the Claims 1-9, **characterised in that** the compensator (2) comprises expansion bellows.

11. Combination according to one of the Claims 1-10, **characterised in that** the sleeve (4) is formed in two pieces.

12. Valve manifold and / or pipe system, **characterised in that** the one and / or the other comprises one, two, three or more of the combinations according to one of the Claims 1 to 11.

13. Method for producing the combination according to one of the Claims 1 to 11, **characterised in that** it comprises the following steps:
pulling the centring sleeve or its parts over one of the two pipes to be connected;
inserting the pipe connector between the two pipes;
optionally affixing guide belts;
pulling the centring sleeve over the compensator and the pipe ends;
optionally inserting two mounting aids through two holes present in the centring sleeve;
optionally affixing two additional mounting aids,
detachable mounting of the pipe connector in the centred position.

## Revendications

1. Combinaison constituée de deux tubes et d'un raccord de conduites tubulaires, combinaison dans laquelle le raccord de conduites tubulaires (1) comprend un compensateur (2) et des moyens pour centrer le raccord de conduites tubulaires (1),
dans laquelle les moyens pour centrer le raccord de conduites tubulaires (1) comportent un manchon de centrage (4) qui, dans l'état fixé dans lequel le raccord de conduites tubulaires est fixé pour relier les tubes, s'étend sur toute la longueur du compensateur, dans laquelle les extrémités de compensateur comportent chacun respectivement une bride (7),
dans laquelle le raccord de conduites tubulaires relie les deux tubes, qui présentent respectivement des brides (8) de même diamètre,
et dans laquelle le raccord de conduites tubulaires (1) comporte des joints d'étanchéité (10), qui, après la fixation du raccord de conduites tubulaires (1) assurent l'étanchéité respectivement entre l'une des brides de tube (8) et la bride (7) associée de l'extrémité de compensateur,
**caractérisée en ce que** les joints d'étanchéité (10) peuvent être remplacés individuellement et sont conçus de manière telle, que dans l'état fixé, ils soient maintenus dans leur position en raison de leur forme, et sont agencés de manière telle, qu'au niveau du bord intérieur de tube, ils s'étendent, dans la direction axiale, à ras avec le bord du raccord de conduites tubulaires et le tube.

2. Combinaison selon la revendication 1, **caractérisée en ce que** le raccord de conduites tubulaires (1), après le centrage, peut être fixé de manière démontable.

3. Combinaison selon l'une des revendications 1-2, **caractérisée en ce que** les moyens pour le centrage comprennent deux bandes de guidage (5).

4. Combinaison selon l'une des revendications 1-3, **caractérisée en ce que** le manchon de centrage (4) peut être fixé par l'intermédiaire d'un ou de deux auxiliaires de fixation (6), comme par exemple des joncs.

5. Combinaison selon l'une des revendications 1-4, **caractérisée en ce que** la possibilité de mouvement des auxiliaires de fixation (6) et/ou du compensateur (2) est limitée dans la direction axiale.

6. Combinaison selon l'une des revendications 1-5, **caractérisée en ce que** le raccord de conduites tubulaires (1) et/ou des parties de celui-ci peuvent être échangés par le côté, sans mouvement des tubes dans la direction axiale.

7. Combinaison selon l'une des revendications 1-6, dans laquelle optionnellement une ou les deux brides (1) présentent un décrochement en gradin d'un côté et/ou comportent un creux.

8. Combinaison selon la revendication 1, **caractérisée en ce que** ses brides (7) ont le même diamètre que les brides (8) des tubes.

9. Combinaison selon l'une des revendications 1-8, **caractérisée en ce que** l'une ou les deux brides (8) des deux tubes à relier comporte ou comportent chacune un creux (16) destiné à recevoir l'auxiliaire ou les auxiliaires de fixation (6), et/ou l'une ou les deux brides (8) présentent un décrochement en gradin sur un côté.

10. Combinaison selon l'une des revendications 1-9, **caractérisée en ce que** le compensateur (2) comprend un soufflet.

11. Combinaison selon l'une des revendications 1-10, **caractérisée en ce que** le manchon (4) est d'une configuration en deux parties.

12. Noeud de vannes et/ou système tubulaire, **caractérisé en ce que** qu'il ou ils comportent une, deux, trois ou davantage de combinaisons selon l'une des revendications 1 à 11.

13. Procédé de fabrication de la combinaison selon l'une des revendications 1 à 11, **caractérisé en ce qu'**il comprend les étapes suivantes consistant à :
faire passer le manchon de centrage ou ses parties par-dessus l'un des deux tubes à relier ;
introduire le raccord de conduites tubulaires entre les deux tubes ;
en option, mettre en place des bandes de guidage ;
faire passer le manchon de centrage par-dessus le compensateur et les extrémités de tube ;
en option, insérer deux auxiliaires de fixation à travers deux trous existants dans le manchon de centrage ;
en option, mettre en place deux autres auxiliaires de fixation ;
fixer de manière démontable le raccord de conduites tubulaires, dans la position centrée.
